Europäisches Patentamt

European Patent Office

Office européen des brevets

(19)

(11) Numéro de publication : **0 200 205 B1**

(12) **FASCICULE DE BREVET EUROPÉEN**

(45) Date de publication du fascicule du brevet :
**11.01.89**

(21) Numéro de dépôt : **86105896.4**

(22) Date de dépôt : **29.04.86**

(51) Int. Cl.⁴ : **F 16 D 23/02, F 16 H 3/12**

(54) Embrayage permettant l'accouplement de deux arbres coaxiaux par une pièce intermédiaire coulissante.

(30) Priorité : **30.04.85 FR 8506573**

(43) Date de publication de la demande :
**05.11.86 Bulletin 86/45**

(45) Mention de la délivrance du brevet :
**11.01.89 Bulletin 89/02**

(84) Etats contractants désignés :
**CH DE FR GB IT LI NL**

(56) Documents cités :
**FR--A-- 816 487**
**FR--A-- 1 541 874**
**FR--A-- 2 487 937**

(73) Titulaire : **ALSTHOM**
**38, avenue Kléber**
**F-75784 Paris Cédex 16 (FR)**

(72) Inventeur : **Marion, Claude**
**1 Place Radigois**
**F-44230 Saint-Sébastien-sur-Loire (FR)**

(74) Mandataire : **Weinmiller, Jürgen et al**
**Lennéstrasse 9 Postfach 24**
**D-8133 Feldafing (DE)**

EP 0 200 205 B1

Jouve, 18, rue St-Denis, 75001 Paris, France

## Description

La présente invention concerne un embrayage permettant l'accouplement de deux arbres coaxiaux par une pièce intermédiaire coulissante, chaque arbre étant muni à son extrémité d'un pignon, ladite pièce intermédiaire coulissante étant en prise permanente avec le pignon de l'un des arbres et coulissant, par un moyen mécanique sur le pignon de l'autre arbre au moment de l'accouplement.

D'une manière générale, ce type d'accouplement mécanique est utilisé pour transmettre de fortes puissances d'un arbre à un autre, par exemple, pour la propulsion de navires. Ces deux arbres tournant à des vitesses différentes, il faut, pour pouvoir les accoupler par la pièce coulissante, les amener à la même vitesse de rotation. Pour réaliser ceci, on utilise un embrayage synchrone, mais comme celui-ci ne permet pas de transmettre de fortes puissances, il faut, après l'accouplement des deux arbres, qu'il ne participe plus à la transmission de la puissance.

On connaît des embrayages synchrones permettant d'amener deux arbres à la même vitesse et ne participant plus à la transmission de puissance après l'accouplement, mais ces embrayages fonctionnant comme une roue libre, à l'aide de cliquets, imposent aux deux arbres de tourner chacun dans le même sens, de ne pas changer le sens de rotation de l'ensemble ni de changer la fonction de chaque arbre, c'est-à-dire que l'arbre menant ne peut pas devenir mené et réciproquement.

Le brevet français 1541874 décrit un mécanisme d'accouplement du type ci-dessus qui comprend un système d'embrayage à friction dans lequel, par l'intermédiaire d'un double train d'engrenage de rapport très voisin mais non identique, on amène l'arbre récepteur à une vitesse très voisine mais non égale à celle de l'arbre moteur, ce qui permet grâce au léger glissement de vitesse d'un arbre par rapport à l'autre d'actionner la pièce intermédiaire coulissante qui s'enclenche lorsque les dentures sont alignées. Un tel dispositif n'est pas souhaitable pour les couples très importants car on risque des broutements causant une usure prématurée ou même une rupture des dents. En outre, dans le dispositif de ce document, même après l'accouplement, les pignons des trains d'engrenages, bien que ne participant plus à la transmission, continuent à tourner ce qui est à l'origine de bruit inutile ou nuisible.

L'embrayage selon la présente invention permet l'accouplement en douceur et plus silencieux de deux arbres, quels que soient au préalable le sens de rotation de ces deux arbres, le sens de rotation choisi une fois l'accouplement réalisé et le caractère menant ou mené de chacun.

L'embrayage selon l'invention est caractérisé en ce qu'il comprend deux porte-satellites mobiles et munis chacun d'un frein et d'au moins trois satellites, et un pignon planétaire central commun engrenant avec les satellites des deux porte-satellites, les satellites de l'un des porte-satellites engrenant en outre à l'intérieur d'une couronne dentée solidaire de l'arbre muni d'un pignon recevant la pièce coulissante intermédiaire au moment de l'accouplement et les satellites de l'autre porte-satellite engrenant en outre à l'intérieur d'une couronne dentée solidaire de la pièce coulissante, les rapports d'engrenage étant choisis de manière à ce que les vitesses respectives des deux arbres coaxiaux à accoupler soient synchrones lorsque les deux porte-satellites sont immobilisés.

De préférence, le moyen mécanique de déplacement de la pièce coulissante est un anneau fixe en rotation, et chaque frein se compose de mâchoires et d'un disque solidaire d'un porte-satellite.

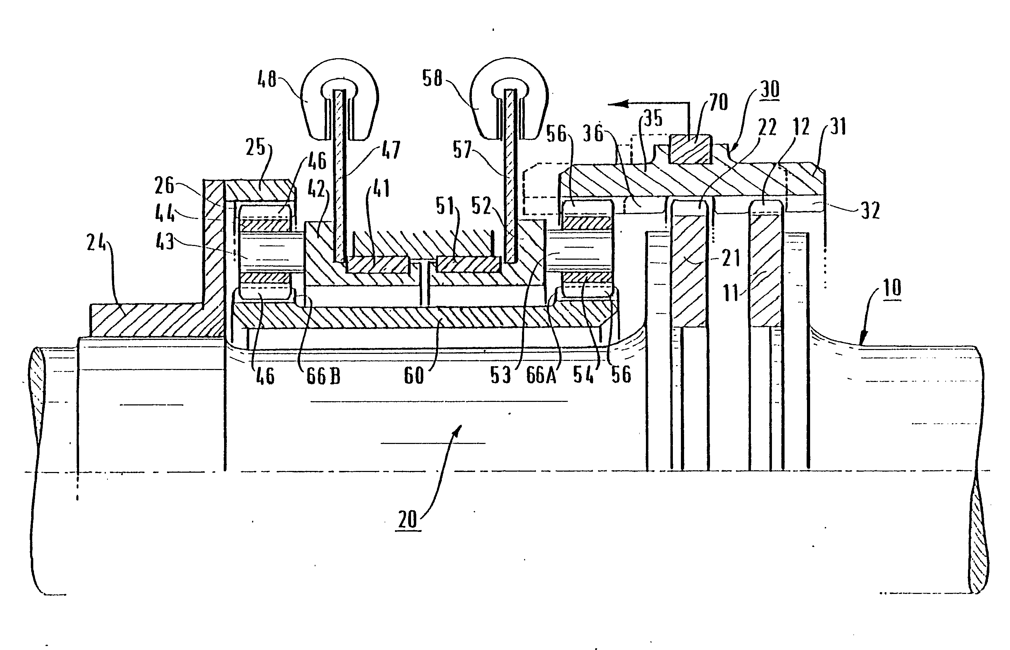

Il est décrit ci-après, à titre d'exemple et en référence au dessin unique, un embrayage synchrone selon l'invention.

La figure unique montre une vue en coupe de l'embrayage et de l'accouplement.

Dans cette figure unique, il est représenté un arbre 10 comportant un pignon 11 munie d'une denture 12 sur toute sa circonférence, un arbre 20 comportant également un pignon 21 munie d'une denture 22 sur toute sa circonférence et une pièce intermédiaire coulissante 30 comportant une couronne dentée 31 munie d'une denture 32. La denture 12 du pignon 11 étant en permanence en prise avec la denture 32 de la pièce intermédiaire coulissante 30, l'accouplement mécanique consiste à déplacer, selon la flèche, cette pièce coulissante 30 pour amener sa denture 32 en prise avec la denture 22 du pignon 21. Cette pièce coulissante 30 est déplacée axialement par un anneau 70 fixe en rotation, lui-même déplacé par un moyen mécanique quelconque, telle qu'une fourchette par exemple. Pour amener ces deux arbres 10, 20 à la même vitesse, on utilise un embrayage composé de deux porte-satellites 42, 52 tournant respectivement dans un palier de guidage 41, 51. Chaque porte-satellites 42, 52 comporte respectivement, au moins trois axes 43, 53 répartis circonférentiellement et sur lesquels tourne un pignon satellite 44, 54 muni d'une denture 46, 56, un disque de frein 47, 57 et des mâchoires associées 48, 58, chaque disque étant bien entendu solidaire d'un porte-satellites. Cet embrayage comporte également un pignon planétaire central commun 60 muni à chacune de ses extrémités d'une denture 66A, 66B, une couronne 25, munie d'une denture 26, solidaire d'un plateau 24 lui-même solidaire de l'arbre 20, et une autre couronne 35, munie d'une denture 36, faisant partie de la pièce coulissante 30. Les satellites 44 du porte-satellite 42 roulent dans la denture 26 de la couronne 25, et les satellites 54 du porte-satellite 52 roulent dans la denture 36 de la couronne 35.

Bien entendu, il est possible de réaliser les dentures 26 et 36 des couronnes dentées 25 et 35 à un diamètre différent de la denture 32 de la pièce 30, avec un même nombre de dents mais avec un module différent, ou avec un nombre de dents multiple ou sous-multiple.

Une opération d'accouplement s'effectue de la manière suivante :

La couronne coulissante 30 est dans la position représentée en traits pleins sur la figure, la denture 12 du pignon 11 étant en prise avec la denture 32 de la pièce 30, la denture 22 du pignon 21 étant désengagée. Les mâchoires de frein 48, 58 étant déssérrées, et les arbres 10 et 20 tournent chacun dans un sens quelconque et à des vitesses différentes, les porte-satellites 42, 52 tournent indifféremment, leur rotation dépendant des frottements dans les organes.

On serre les mâchoires 58 pour bloquer le porte-satellite 52. La denture 36 de la couronne 30 entraîne en rotation autour des axes 53 les satellites 54 et eux-mêmes entraînent en rotation le pignon central 60 par l'intermédiaire de sa denture 66A, dans un sens de rotation opposé à celui de l'arbre 10.

On serre ensuite les mâchoires 48 pour bloquer le porte-satellite 42. La denture 66B du pignon planétaire 60 entraîne, en rotation autour des axes 43, les pignons satellites 44 et eux-mêmes entraînent alors en rotation dans le même sens la couronne 25 de l'arbre 20.

A cet instant, les arbres 10, 20 tournent à la même vitesse, dans le même sens, seul le pignon planétaire central 60 tournant en sens opposé. Il est alors possible de déplacer la pièce coulissante 30 pour amener sa denture 32 en prise avec la denture 22 de l'arbre 20. Par construction les dentures 22 et 26 sont alignées, les dentures 66A et 66B étant également alignées et ayant choisi le même nombre de dents pour les dentures 26, 36, les dentures 26 et 36 sont alors alignées et donc aussi les dentures 22 et 36. En outre, par construction, une dent 32 est alignée avec l'intervalle situé entre deux dents 36 de la couronne 35. Comme 22 est aligné avec 36, 22 est donc alignée avec 12 et donc alignée dans l'intervalle de deux dents 32 de la couronne 31. L'accouplement est alors possible en déplaçant la pièce 30 à l'aide de l'anneau 70.

On desserre les mâchoires 48 et 58, les porte-satellites 42, 52 sont alors libres en rotation et la transmission de puissance ne passe plus par l'embrayage. Cette transmission se fait uniquement par l'accouplement à dentures et l'on peut alors monter en puissance.

Bien entendu, on peut inverser l'ordre de serrage des mâchoires cela ne modifiera pas le fonctionnement de l'embrayage.

Pour débrayer l'accouplement à dentures, il est possible de simplement déplacer axialement la pièce 30 mais pour éviter les à-coups aux extrémités des dentures, il est préférable de reprendre l'opération décrite mais en sens inverse.

**Revendications**

1. Embrayage permettant l'accouplement de deux arbres coaxiaux (10, 20) par une pièce intermédiaire coulissante (30), chaque arbre étant muni à son extrémité d'un pignon (11, 21), ladite pièce intermédiaire coulissante étant en prise permanente avec le pignon (11) de l'un (10) des arbres et coulissant, par un moyen mécanique (70), sur le pignon (21) de l'autre arbre au moment de l'accouplement, caractérisé en ce qu'il comprend deux porte-satellites mobiles (42, 52) et muni chacun d'un frein et d'au moins trois satellites (44, 54), et un pignon planétaire central commun (60) engrenant avec les satellites des deux porte-satellites, les satellites (44) de l'un (42) des porte-satellites engrenant en outre à l'intérieur d'une couronne dentée (25) solidaire de l'arbre (20) muni d'un pignon (21) recevant la pièce coulissante (30) au moment de l'accouplement et les satellites (54) de l'autre porte-satellites (52) engrenant en outre à l'intérieur d'une couronne dentée (35) solidaire de la pièce coulissante (30), les rapports d'engrenage étant choisis de manière à ce que les vitesses respectives des deux arbres coaxiaux à accoupler soient synchrones lorsque les deux porte-satellites sont immobilisés.

2. Embrayage selon la revendication 1, caractérisé en ce que le moyen mécanique de déplacement de la pièce coulissante est un anneau (70) fixe en rotation.

3. Embrayage selon l'une des revendications 1 à 2, caractérisé en ce que chaque frein se compose de mâchoires (48, 58) et d'un disque (47, 57) solidaire d'un porte-satellite (42, 52).

**Claims**

1. A clutch enabling two colinear shafts (10, 20) to be coupled together by means of an intermediate sliding part (30), each shaft being provided at its end with a gear (11, 21), said intermediate sliding part being permanently engaged with the gear (11) of one (10) of the shafts and being slidable by mechanical means (70) over the gear (21) of the other shaft when coupling takes place, the clutch being characterized in that it includes two moving planet carriers (42, 52) each provided with a brake and with at least three planet wheels (44, 54), and a common central sun gear (60) meshing with the planets of the two planet carriers, the planets (44) of one (42) of the planet carriers also meshing with the inside of a toothed ring (25) fixed to the shaft (20) carrying a gear (21) which receives the sliding part (30) when coupling takes place, and the planets (54) of the other planet carrier (52) also meshing inside a toothed ring (35) fixed to the sliding part (30), the gear ratios being selected in such a manner that the respective speeds of the two colinear shafts to be coupled together are synchronous when the two planet carriers are stationary.

2. A clutch according to claim 1, characterized in that the mechanical means for displacing the sliding part are constituted by a ring (70) which is prevented from rotating.

3. A clutch according to claim 1 or 2, characterized in that each brake is constituted by jaws (48, 58) and a disk (47, 57) fixed to one of the planet carriers (42, 52).

## Patentansprüche

1. Kupplung, die das Kuppeln zweier koaxialer Wellen (10, 20) mittels eines gleitenden Zwischenstücks (30) ermöglicht, wobei jede Welle an ihrem Ende mit einem Zahnrad (11, 21) versehen ist, das gleitende Zwischenstück in ständigem Eingriff mit dem Zahnrad (11) einer der Wellen (10) steht und durch ein mechanisches Mittel (70) auf das Zahnrad (21) der anderen Welle im Augenblick des Koppelns aufgleitet, dadurch gekennzeichnet, daß sie zwei bewegliche Planetenträger (42, 52), die je mit einer Bremse und mindestens drei Planetenrädern (44, 54) ausgestattet sind, und ein gemeinsames zentrales Planetzahnrad (60) aufweist, das mit den Planetenrädern der beiden Planetenträger im Eingriff steht, wobei die Planetenräder (44) des einen Planetenträgers (42) außerdem in das Innere einer Zahnkrone (25) eingreifen, die fest mit derjenigen Welle (20) verbunden sind, die mit dem im Augenblick des Koppelns auf das Zwischenstück (30) aufgleitenden Zahnrad (21) versehen ist, und wobei die Planetenräder (54) des anderen Planetenträgers (52) außerdem mit dem Inneren einer Zahnkrone (35) verzahnt sind, die mit dem Zwischenstück (30) fest verbunden ist, wobei die Verzahnungsverhältnisse so gewählt sind, daß die jeweiligen Geschwindigkeiten der beiden koaxialen zu koppelnden Wellen synchron sind, wenn die beiden Planetenträger angehalten werden.

2. Kupplung nach Anspruch 1, dadurch gekennzeichnet, daß das mechanische Mittel (70) zur Verschiebung des gleitenden Stücks ein drehfester Ring ist.

3. Kupplung nach einem der Ansprüche 1 bis 2, dadurch gekennzeichnet, daß jede Bremse aus Backen (48, 58) und einer fest mit einem Planetenträger (42, 52) verbundenen Scheibe (47, 57) besteht.

EP 0 200 205 B1